| | Europäisches Patentamt | |
|---|---|---|
| (19) | European Patent Office | |
| | Office européen des brevets | (11)  **EP 0 693 682 B1** |

(12)  ## EUROPÄISCHE PATENTSCHRIFT

(45) Veröffentlichungstag und Bekanntmachung des Hinweises auf die Patenterteilung:
**08.07.1998  Patentblatt 1998/28**

(51) Int Cl.$^6$: **G01N 21/31**

(21) Anmeldenummer: **95890088.8**

(22) Anmeldetag: **08.05.1995**

(54) **Verfahren zur Bestimmung der Konzentration c eines in einer Trägersubstanz homogen verteilten Absorbens**

Method for determining the concentration c of an absorbent homogeneously distributed on a support

Procédé pour la détermination de la concentration c d'un absorbant réparti homogènement sur un support

(84) Benannte Vertragsstaaten:
**DE FR GB**

(30) Priorität: **18.07.1994  AT  1411/94**

(43) Veröffentlichungstag der Anmeldung:
**24.01.1996  Patentblatt 1996/04**

(73) Patentinhaber: **AVL Medical Instruments AG
8207 Schaffhausen (CH)**

(72) Erfinder: **Schweiger, Gerd, Dipl. Ing.
A-8010 Graz (AT)**

(74) Vertreter: **Babeluk, Michael, Dipl.-Ing. Mag.,
Patentanwälte Babeluk - Krause et al
Mariahilfer Gürtel 39/17
1150 Wien (AT)**

(56) Entgegenhaltungen:
**EP-A- 0 158 506          EP-A- 0 210 417
EP-A- 0 333 017          WO-A-89/01758
WO-A-93/06456          WO-A-94/08237
CH-A- 637 767          DE-A- 4 203 587**

## Beschreibung

Die Erfindung betrifft ein Verfahren zur Bestimmung der Konzentration c eines in einer Trägersubstanz homogen verteilten Absorbens, wobei ausgehend vom Lambert-Beerschen Gesetz $a(\lambda) = \varepsilon(\lambda) \cdot c \cdot d$ bei bekanntem spektralen Absorptionswert $\varepsilon(\lambda)$ die Absorption $a(\lambda)$ des Absorbens gemessen wird.

In veschiedenen Einsatzgebieten besteht die Notwendigkeit, die Konzentration c einer Substanz durch eine Absorptionsmessung zu bestimmen. Ausgehend vom Lambert-Beerschen Gesetz

$$a(\lambda) = \varepsilon(\lambda) \cdot c \cdot d$$

wird die Konzentration c bei bekannten spektralen Absorptionsverlauf $\varepsilon(\lambda)$ sowie bekannter Schichtdicke d aus der Messung der Absorption $a(\lambda)$ berechnet.

Umgekehrt besteht in solchen Vorrichtungen die Notwendigkeit, die Schichtdicke d in regelmäßigen zeitlichen Abständen zu kalibrieren oder zumindest zu kontrollieren, da ein allfälliger Fehler direkt in den berechneten Wert für die Konzentration c eingeht. Üblicherweise wird diese Kalibration bzw. Kontrolle mit einem Medium vorgenommen, dessen Konzentration und spektrales Absorptionsverhalten sehr genau bekannt ist.

Eine serienmäßige Herstellung eines solchen Kalibrationsmediums bedingt daher höchste Präzision im Fertigungsablauf, die mit vertretbarem finanziellen Aufwand oft nicht erreichbar ist. Stattdessen wird herstellerseitig jede Charge genau vermessen und die ermittelten Zielwerte auf einem Beipackzettel vermerkt. Die Verantwortung für eine ordnungsgemäße Kalibration des Gerätes liegt in diesem Fall beim Anwender. Nachteilig bei diesem Verfahren ist, daß eine Vielzahl neuer Fehlerquellen eingeführt wird, z.B. Vertauschen des Beipackzettels bei Verwendung mehrerer Chargen, Ablese- und Eingabefehler u.s.w.

Die nachstehend kurz beschriebenen, bekannten Verfahren bzw. Meßanordnungen, welche sich des Lambert-Beerschen Gesetzes bedienen, um über die gemessene Absorption einer Probe auf die Konzentration einzelner Probenbestandteile zu schließen, weisen die bereits genannten Nachteile auf, da es auch hier in jedem Fall notwendig ist, die exakte Schichtdicke der Probe zu kennen bzw. diese regelmäßig zu kalibrieren.

So beschreibt beispielsweise die AT-E-56 271 ein Verfahren zur Konzentrationsbestimmung von Hämoglobinderivaten im Vollblut, welches sich gegenüber herkömmlichen Multikomponentenanalysen dadurch unterscheidet, daß auch Trübungen der Probe, verursacht durch Leukozyten, Blutfettüberschuß oder Erytrozyten u.s.w. berücksichtigt werden können.

Eine ähnliche Multikomponenten-Analyse wird in der DE A 42 03 587 geoffenbart. Die Ermittlung der in einer Probe vorhandenen Bestandteile erfolgt auf der Grundlage des Absorptionsvermögens an festgelegten Wellenzahlpunkten im Absorptionsspektrum der Probe. Dazu wird im Voraus eine angenommene Konzentrationsermittlungsmatrix anhand einer Kombination von Referenzspektren für eine Mehrzahl von Bestandteilen, deren Konzentration bekannt sind, erstellt. Die Konzentrationen der jeweiligen zu messenden Bestandteile werden unter Verwendung dieser Konzentrationsermittlungsmatrix berechnet, wodurch sich die quantitative Analyse in sehr kurzer Zeit und mit hoher Genauigkeit durchführen läßt.

Aus der CH-A 637 767 ist es schließlich bekannt, zur Messung von Stoffkonzentrationen der Probe einen ersten Indikator zuzusetzen, der auf die Änderung der Konzentration eines zu messenden Stoffes mit einer Spektraländerung reagiert und zusätzlich einen Referenzindikator zuzufügen, welcher das Meßlicht verändert, nicht aber von der Konzentration des zu messenden Stoffes verändert wird. Alle bekannten Verfahren setzen jedoch - wie bereits eingangs erwähnt - die exakte Kenntnis der vermessenen Schichtdicke voraus.

Aufgabe der Erfindung ist es, ein Verfahren zur Bestimmung der Konzentration eines in einer Trägersubstanz homogen verteilten Absorbens vorzuschlagen, welches die angeführten Nachteile vermeidet und insbesondere eine genaue Kenntnis der Schichtdicke der zu vermessenden Probe nicht voraussetzt.

Diese Aufgabe wird erfindungsgemäß dadurch gelöst, daß bei unbekannter Schichtdicke d der Trägersubstanz ein Absorbens verwendet wird, dessen gemessene Absorption $a(\lambda)$ vor allem im Bereich höherer Konzentration von Lambert-Beerschen Gesetz abweicht, daß $n \geq 2$ fiktive Komponenten des Absorbens angenommen werden, sodaß gilt $a(\lambda) = (\varepsilon_1(\lambda) \cdot c_1 + \varepsilon_2(\lambda) \cdot c_2 + \dots + \varepsilon_n(\lambda) \cdot c_n) \cdot d$, daß bei zumindest n Wellenlängen die Absorption $a(\lambda_i)$ gemessen wird, daß die spektralen Absorptionswerte $\varepsilon_i(\lambda_i)$ und die Konzentrationen $c_i$ der fiktiven Komponenten berechnet werden, sowie daß aus dem aus Kalibriermessungen abgeleiteten funktionalen Zusammenhang zwischen der Konzentration c und den Konzentrationen $c_i$ der fiktiven Komponenten $c = f(c_i)$ die Konzentration c bestimmt wird.

Mit dem erfindungsgemäßen Verfahren ist es selbstverständlich auch möglich, die Schichtdicke d der Trägersubstanz zu bestimmen, ohne die Konzentrtion c des in der Trägersubstanz verteilten Absorbens zu kennen.

In vorteilhaften Ausführungsvarianten der Erfindung wird vorgeschlagen, daß die aus der nachfolgenden Tabelle ersichtlichen Stoffklassen bzw. bevorzugt deren typische Vertreter als Absorbens verwendet werden.

| Stoffklasse | Typische Vertreter |
|---|---|
| Triphenylmethanfarbstoffe | Rhodamin<br>Sulforhodamin<br>Kristallviolett<br>Fluorescin |
| Azo Farbstoffe | Buttergelb<br>Bismarckbraun |
| Chinon Farbstoffe | Antrachinon<br>Naphtochinon<br>Indanthren |
| Porphyrine und Phtalocyanine | |
| Cyanine | Oxazole<br>Merocyanine |
| Polyzyklische aromatische Kohlenwasserstoffe | Decacylen<br>Perylen<br>Naphtacaen |
| Indigo Farbstoffe | Indigo |

Die Erfindung wird im folgenden anhand der Zeichnungen näher erläutert. Es zeigen Fig. 1 Absorptionsspektren von Kalibrierlösungen unterschiedlicher Konzentrationen, Fig. 2 die Referenzspektren für ein Zweikomonentensystem, Fig. 3 ein Diagramm der fiktiven Komponenten $c_1$, $c_2$, aufgetragen über der eingewogenen Konzentration c und Fig. 4 den funktionalen Zusammenhang zwischen der Absolutkonzentration c und dem Quotienten der fiktiven Konzentrationen $c_2$ und $c_1$.

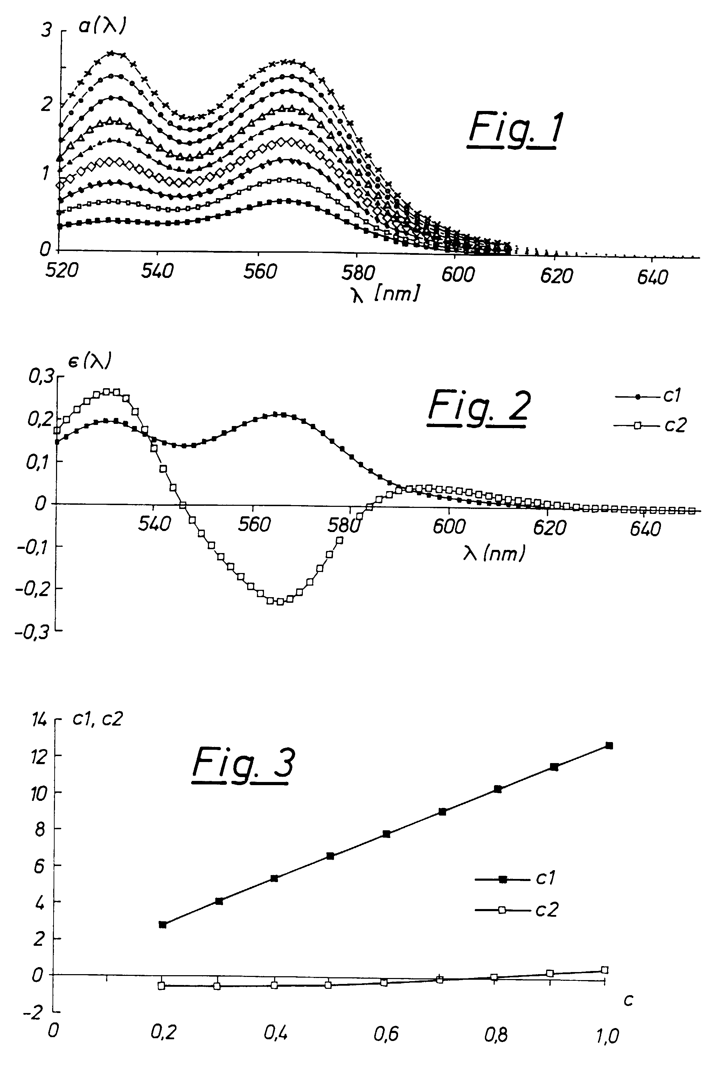

Verschiede Farbstoffe, z.B. Sulforhodamin B, zeigen vor allem im Bereich höherer Konzentrationen Abweichungen vom Lambert-Beerschen Gesetz. Diese Abweichungen sind dadurch charakterisiert, daß die gemessene Absorption a ($\lambda$) nicht direkt proportional mit der Konzentration der absorbierenden Substanz ansteigt. In Fig. 1 sind die Absorptionsverläufe von 520 bis 640 nm für neun verschiedene durch unterschiedliche graphische Symbole gekennzeichnete Konzentrationen der hochreinen Grundsubstanz dargestellt.

Bereits mit freiem Auge erkennt man, daß der linke peak "schneller" zu wachsen scheint als der rechte. Die gesamte Kurvenschar läßt sich also mathematisch durch eine einzige Komponente

$$a(\lambda) = \varepsilon(\lambda) \cdot c \cdot d$$

nur unbefriedigend beschreiben, obwohl ihr nur eine Grundsubstanz zugrunde liegt. Dieses Bild ändert sich vollständig, wenn man eine Beschreibung mit n fiktiven Komponenten

$$a(\lambda) = (\varepsilon_1(\lambda) \cdot c_1 + \varepsilon_2(\lambda) \cdot c_2 + ... + \varepsilon_n(\lambda) \cdot c_n) \cdot d$$

wählt. Über mathematische Verfahren, (z.B. eine Singular Value Decomposition) lassen sich die spektralen Absorptionsverläufe $\varepsilon$ ($\lambda$) der einzelnen fiktiven Komponenten berechnen, die zueinander orthogonal sind. Der Einfachheit halber und ohne Einschränkung der Allgemeingültigkeit wird nachfolgend der Fall eines Zweikomponentensystems, d. h. n = 2, beschrieben (siehe Referenzspektren Fig. 2).

Für dieses System lassen sich die Konzentrationen der Einzelkomponenten mittels der bekannten Methoden der Multikomponentenanalyse berechnen, wenn vorausgesetzt wird, daß die Anzahl der Meßwellenlängen m ≥ n ist.

Eine genauere Analyse der Daten zeigt, daß die beiden fiktiven Komponenten $c_1$ und $c_2$ nicht unabhängig voneinander auftreten, im Gegenteil: Berechnet man für die Verdünnungsreihe die Konzentration $c_1$ und $c_2$ und trägt diese als Funktionen der eingewogenen Konzentration c der Grundsubstanz auf so ergibt sich das Diagramm nach Fig. 3.

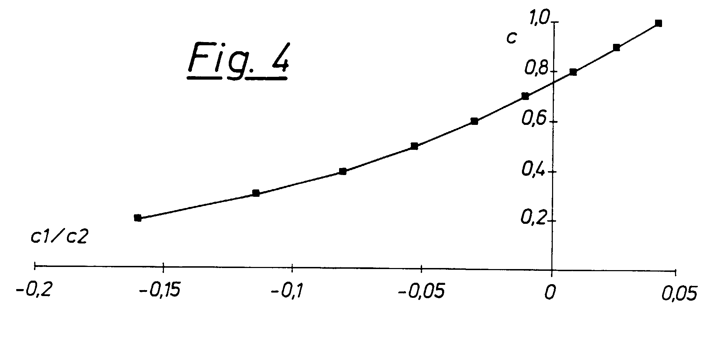

Zu jeder Konzentration $c_1$ gehört also eine genau definierte Konzentration $c_2$, wobei z.B. der Quotient $c_2/c_1$ unabhängig von der tatsächlichen Schichtdicke ist und nur die Information über die Absolutkonzentration c der Grundsubstanz enthält. Der funktionale Zusammenhang $c = f(c_2/c_1)$ ist in Fig. 4 dargestellt.

In der Praxis bietet sich an, diese Funktion durch ein Polynom, eine Tabelle oder ein gleichwertiges Verfahren zu erfassen.

Die Information über die aktuelle Schichtdicke ist dagegen in den berechneten Konzentrationen $c_1$ und $c_2$ enthalten. Unter der Voraussetzung, daß die Referenzspektren bei genau bekannter Normalschichtdicke $d_0$ bestimmt wurden, gibt es eine eindeutig definierte Funktion $c_1 = g(c)$, die den Zusammenhang zwischen der Konzentration der Grundsubstanz c und der zugehörigen Konzentration $c_1$ beschreibt. Eine Abweichung der berechneten Konzentration $c_1$ vom Erwartungswert ist damit direkt der Schichtdickenabweichung vom Normalwert $d_0$ proportional. Es gilt:

$$\frac{dakt}{d_0} = \frac{c_1 \text{ gemessen}}{c_1 \text{ erwartet}}$$

mit

| | |
|---|---|
| dakt | aktuelle Schichtdicke |
| $d_0$ | Normalschichtdicke |
| $c_1$ gemessen | Ergebnis der Multikomponentenanalyse |
| $c_1$ erwartet | aus der Funktion $c_1 = g(c)$ mit $c = f(c_2/c_1)$ |

Damit ergibt sich die auf den ersten Blick überraschende Möglichkeit, die Schichtdicke einer Küvette mit einem Farbstoff unbekannter Konzentration zu kalibrieren. Dieses Verfahren kann vollautomatisch, d. h. ohne Eingriff des Benutzers eingesetzt werden und vermeidet daher die anfangs erwähnten Fehlermöglichkeiten.

**Patentansprüche**

1. Verfahren zur Bestimmung der Konzentration c eines in einer Trägersubstanz homogen verteilten Absorbens, wobei ausgehend vom Lambert-Beerschen Gesetz $a(\lambda)=\varepsilon(\lambda)\cdot c\cdot d$ bei bekanntem spektralen Absorptionswert $\varepsilon(\lambda)$ die Absorption $a(\lambda)$ des Absorbens gemessen wird, **dadurch gekennzeichnet**, daß bei unbekannter Schichtdicke d der Trägersubstanz ein Absorbens verwendet wird, dessen gemessene Absorption $a(\lambda)$ vor allem im Bereich höherer Konzentration von LambertBeerschen Gesetz abweicht, daß $n \geq 2$ fiktive Komponenten des Absorbens angenommen werden, sodaß gilt $a(\lambda) = (\varepsilon_1(\lambda) \cdot c_1 + \varepsilon_2(\lambda) \cdot c_2 + \ldots\ldots + \varepsilon_n(\lambda) \cdot c_n)\cdot d$, daß bei zumindest n Wellenlängen die Absorption $a(\lambda_i)$ gemessen wird, daß die spektralen Absorptionswerte $\varepsilon_i(\lambda_i)$ und die Konzentrationen $c_i$ der fiktiven Komponenten berechnet werden, sowie daß aus dem aus Kalibriermessungen abgeleiteten funktionalen Zusammenhang zwischen der Konzentration c und den Konzentrationen $c_i$ der fiktiven Komponenten $c=f(c_i)$ die Konzentration c bestimmt wird.

2. Verfahren nach Anspruch 1, **dadurch gekennzeichnet,** daß als Absorbens eine Substanz aus der Gruppe der Triphenylmethanfarbstoffe, vorzugsweise Rhodamin, Sulforhodamin, Kristallviolett oder Fluorescin verwendet wird.

3. Verfahren nach Anspruch 1, **dadurch gekennzeichnet,** daß als Absorbens eine Substanz aus der Gruppe der Azo Farbstoffe, vorzugsweise Buttergelb oder Bismarckbraun verwendet wird.

4. Verfahren nach Anspruch 1, **dadurch gekennzeichnet,** daß als Absorbens eine Substanz aus der Gruppe der Chinon Farbstoffe, vorzugsweise Antrachinon, Naphtochinon oder Indanthren verwendet wird.

5. Verfahren nach Anspruch 1, **dadurch gekennzeichnet,** daß als Absorbens eine Substanz aus der Gruppe der Porphyrine und Phtalocyanine verwendet wird.

6. Verfahren nach Anspruch 1, **dadurch gekennzeichnet,** daß als Absorbens eine Substanz aus der Gruppe der Cyanine, vorzugsweise Oxazole oder Merocyanine verwendet wird.

7. Verfahren nach Anspruch 1, **dadurch gekennzeichnet**, daß als Absorbens eine Substanz aus der Gruppe der polyzyklischen aromatischen Kohlenwasserstoffe, vorzugsweise Decacyclen, Perylen oder Naphtacaen verwendet wird.

8. Verfahren nach Anspruch 1, **dadurch gekennzeichnet**, daß als Absorbens eine Substanz aus der Gruppe der Indigo Farbstoffe, vorzugsweise Indigo verwendet wird.

## Claims

1. Method for determining the concentration c of an absorbent homogeneously distributed in a carrier, in which the absorption $a(\lambda)$ of the absorbent is measured while the value of spectral absorption $\varepsilon(\lambda)$ is known, using Lambert-Beer's law $a(\lambda) = \varepsilon(\lambda).c.d$ as a basis, wherein, in the absence of a known value for the film thickness d of the carrier, an absorbent is employed whose measured absorption $a(\lambda)$ deviates from Lambert-Beer's law, in particular in the region of higher concentration, and wherein $n \geq 2$ fictitious components of the absorbent are assumed, so that

$$a(\lambda) = (\varepsilon_1(\lambda).c_1 + \varepsilon_2(\lambda).c_2 + ..... \varepsilon_n(\lambda).c_n).d,$$

and wherein the absorption $a(\lambda_i)$ is measured for at least n wavelengths, and wherein the spectral absorption values $\varepsilon_i(\lambda_i)$ and concentrations $c_i$ of the fictitious components are computed, and, further, wherein the concentration c is determined from the functional relationship between the concentration c and concentrations $c_i$ of the fictitious components $c=f(c_i)$, which relationship is obtained by calibrating measurements.

2. Method as in claim 1, wherein the absorbent is a medium selected from the group of triphenylmethane dyes, i.e., preferably rhodamine, sulforhodamine, crystal violet, or fluorescein.

3. Method as in claim 1, wherein the absorbent is a medium selected from the group of azo dyes, i.e., preferably butter yellow or Bismarck brown.

4. Method as in claim 1, wherein the absorbent is a medium selected from the group of quinonoid dyes, i.e., preferably anthraquinone, naphthoquinone, or indanthrene.

5. Method as in claim 1, wherein the absorbent is a medium selected from the group of porphyrins and phthalocyanines.

6. Method as in claim 1, wherein the absorbent is a medium selected from the group of cyanines, i.e., preferably oxazole or merocyanine.

7. Method as in claim 1, wherein the absorbent is a medium selected from the group of polycyclic aromatic hydrocarbons, i.e., preferably decacyclene, perylene, or naphthacene.

8. Method as in claim 1, wherein the absorbent is a medium selected from the group of indigo dyes, i.e., preferably indigo.

## Revendications

1. Procédé pour déterminer la concentration c d'une substance absorbée répartie d'une manière homogène dans une substance de support, s'appuyant sur la loi de Lambert-Beer $a(\lambda) = \varepsilon(\lambda).c.d$, dans lequel on mesure l'absorption $a(\lambda)$ de la substance absorbée dont le coefficient d'absorption spectral $\varepsilon(\lambda)$ est connu, **caractérisé en ce que,** lorsque l'épaisseur de la couche d'absorption d de la substance de support est inconnue, on utilise une substance absorbée dont l'absorption mesurée $a(\lambda)$ dévie de la loi de Lambert-Beer dans la région des concentrations élevées, que la substance absorbée est considérée comme étant constituée par $\geq 2$ composants fictifs, si bien que l'on a $a(\lambda) = (\varepsilon_1(\lambda).c_1 + \varepsilon_2(\lambda).c_2 + ..... + \varepsilon_n(\lambda).c_n).d$, que l'absorption $a(\lambda_i)$ est mesurée au moins à n longueurs d'onde, que le coefficient d'absorption spectral $\varepsilon_i(\lambda_i)$ et la concentration ci du composant fictif sont calculés, et que la relation dérivée de mesures d'étalonnage entre la concentration c et la concentration $c_i$ du composant fictif, c'est-à-dire $c = f(c_i)$, est utilisée pour déterminer la concentration c.

2. Procédé selon la revendication 1, **caractérisé en ce que** la substance absorbée est une substance du groupe des triphénylméthanes, de préférence la rhodamine, la sulforhodamine, le violet cristallisé ou la fluorescéine.

3. Procédé selon la revendication 1, **caractérisé en ce que** la substance absorbée est une substance du groupe des colorants azoïques, de préférence le jaune de chrysoïde ou le brun Bismarck.

4. Procédé selon la revendication 1, **caractérisé en ce que** la substance absorbée est une substance du groupe des colorants quinones, de préférence l'anthraquinone, la naphtoquinone ou l'indanthrène.

5. Procédé selon la revendication 1, **caractérisé en ce que** la substance absorbée est une substance du groupe des porphyrines et des phtalocyanines.

6. Procédé selon la revendication 1, **caractérisé en ce que** la substance absorbée est une substance du groupe des cyanines, de préférence l'oxazole ou la mérocyanine.

7. Procédé selon la revendication 1, **caractérisé en ce que** la substance absorbée est une substance du groupe des hydrocarbures aromatiques polycycliques, de préférence le décacyclène, le perylène ou la naphtacène.

8. Procédé selon la revendication 1, **caractérisé en ce que** la substance absorbée est une substance du groupe des colorants indigo, de préférence l'indigo proprement dit.

*Fig. 1*

*Fig. 2*

*Fig. 3*

Fig. 4